# EUROPÄISCHE PATENTSCHRIFT

(11) **EP 1 293 021 B1**
(45) Veröffentlichungstag und Bekanntmachung des Hinweises auf die Patenterteilung: **15.06.2005**
(21) Anmeldenummer: 00993464.7
(22) Anmeldetag: 08.12.2000
(51) Int. Cl.: H02B 1/30

(54) **KABELDURCHFÜHRUNG FÜR SCHALTSCHRÄNKE**
CABLE FEED-THROUGH FOR SWITCHGEAR CABINETS
PASSAGE DE CABLES POUR ARMOIRES ELECTRIQUES

(30) Priorität: 18.12.1999 DE 19962151
(43) Veröffentlichungstag der Anmeldung: 19.03.2003
(73) Patentinhaber: Ehmann, Bruno, 73563 Mögglingen (DE); Bethke, Detlev, 74405 Gaildorf (DE)
(72) Erfinder: Ehmann, Bruno, 73563 Mögglingen (DE); Bethke, Detlev, 74405 Gaildorf (DE)
(86) Internationale Anmeldenummer: PCT/EP2000/012366
(87) Internationale Veröffentlichungsnummer: WO 2001/045219

(56) Entgegenhaltungen:
- DE-A- 19 730 430
- DE-C- 4 207 281
- DE-C- 19 604 219

## Beschreibung

Kabeldurchführungen sind in der DE 42 07 281 beschrieben. Dort besteht die eigentliche Kabeldurchführung aus Bodenblechen. Diese Bodenbleche sind mit benachbarten Bodenblechen verbunden, allerdings in konstruktiv aufwendiger Art. Die Abdichtung zwischen benachbarten Bodenblechen ist auch dürftig.

Diese Nachteile löst die Erfindung durch die Merkmale nach Anspruch 1 und 4.

Bei der Erfindung ist die Kabeldurchführung ein "Zwischenstück", das zwischen die bekannten Bodenbleche gelegt wird. Die Längskanten der bekannten Bodenbleche werden in Nuten der Kabeldurchführung gesteckt. Die Nuten und Kanten sind dabei in fast gleicher Höhe angeordnet. Es wird eine passgenaue Verbindung zwischen den Nuten und Kanten hergestellt. Der technische Witz ist, daß eine vorkonfektionierte Kabefdurchführungsteiste z. B. in den Boden eines Schaltschrankes gelegt wird. Dann müssen nur noch die Bodenbleche verschoben werden, so daß deren Kanten in die Nuten der Kabeldurchführung hineinragen. Wenn diese Nuten z.B. mit Gummi oder einem weichem Kunststoff ausgekleidet sind, dann ergibt sich eine dichte Verbindung von selbst. Die Kabeldurchführung ist so beschaffen, daß auch zwei oder mehrere Kabeidurchführungen nebeneinander angeordnet sein können. Sie werden dabei mit Hilfe eines Zwischen-Blechstücks verbunden.

Weitere Vorteile der Erfindung sind in den Unteransprüchen wiedergegeben und in der Zeichnung schematisch dargestellt.

Es zeigen:
- Fig. 1: den Boden eines Schaltschranks,

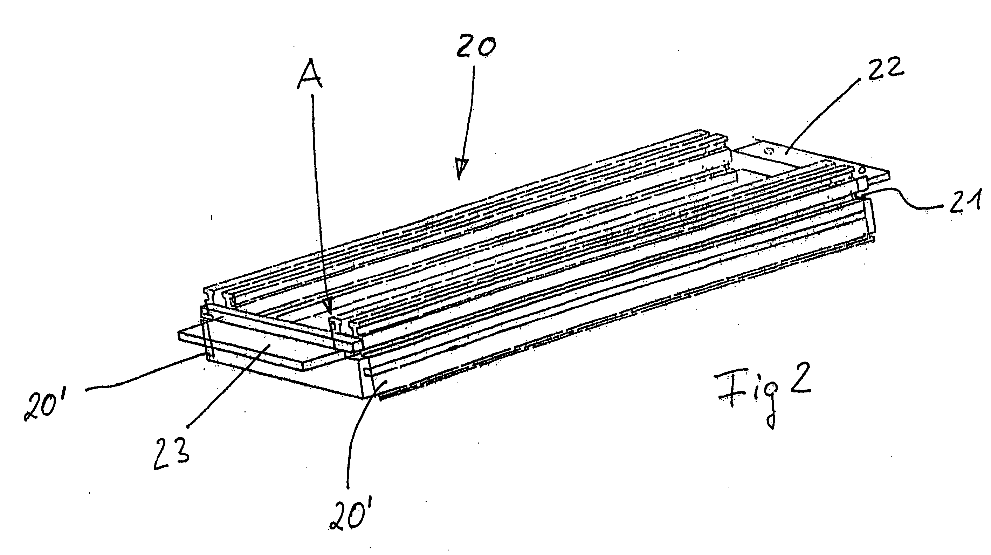

- Fig. 2: den Grundkörper einer Kabeldurchführung,

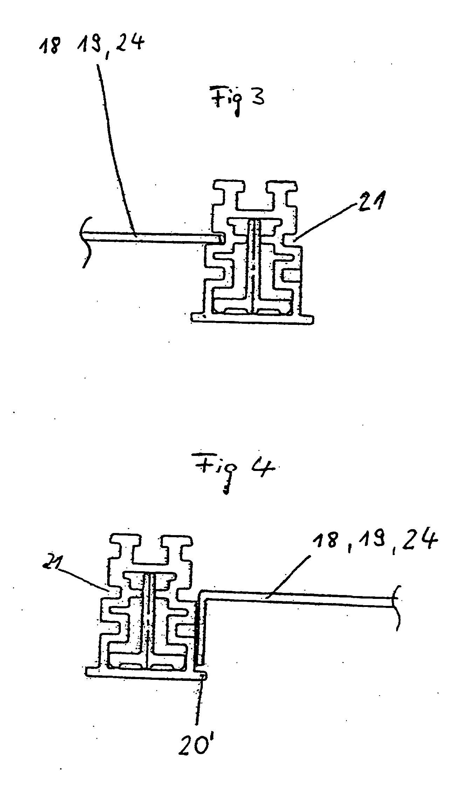

- Fig. 3: die Verbindung zwischen dem Blech und der Kabeldurchführung und
- Fig. 4: ein abgekantetes Bodenblech verbunden mit der Kabeldurchführung

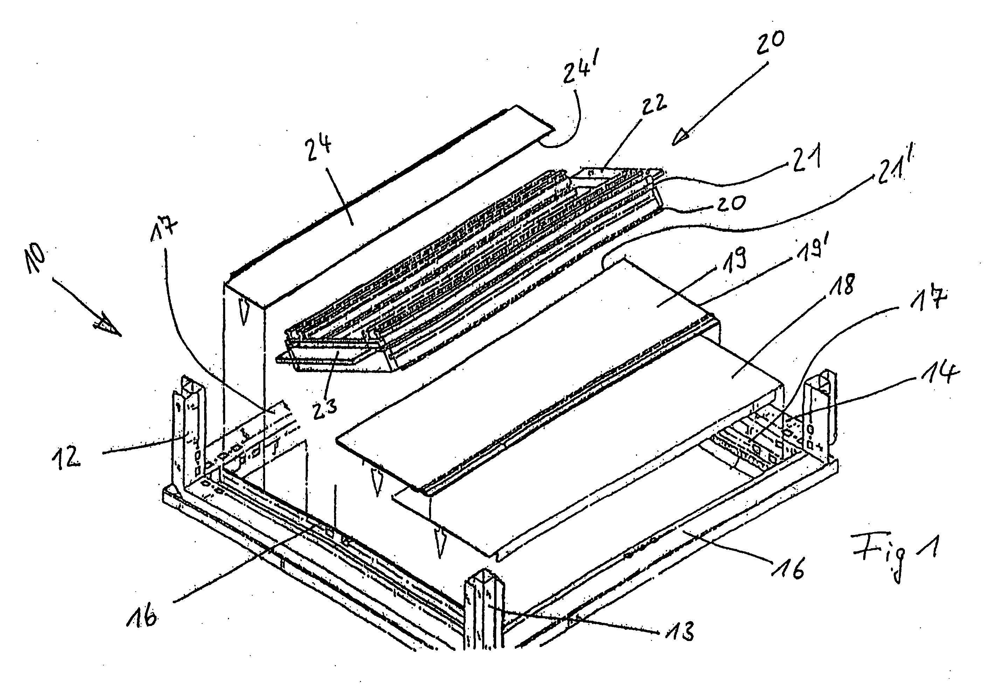

In Fig. 1 ist der Bodenteil 10 eines Schaltschrankes gezeigt. Er besteht aus Rahmenschenkeln 16, 17 und vertikalen Rahmengestellprofilen 12. Er ist abgedeckt mit Bodenblechen 18, 19, 24. Zwischen den Blechen 19 und 24 ist eine Kabeldurchführung 20. Sie hat einen Grundkörper mit Schenkeln 22,23. Die Schenkel 22,23 stützen sich auf den Rahmenschenkeln 16,17 ab. Auf den beiden Längsseiten sind Nuten 21 ausgebildet. In diese Nuten sind die Längskanten 21', 24', einsteckbar. Die Bleche 19,24 sind mit der Kabeldurchführung 20 fest verbindbar. Wichtig ist, daß die Längskanten 21', 24'in gleicher Höhe sind wie die Nuten 21. Montage: zwischen den Blechen 19, 24 wird eine Öffnung gebildet, die breiter ist als die Breite der Kabeldurchführung 20. Dann wird die vorkonfektionierte Kabeldurchführung 20 eingelegt. Danach werden die Bleche 19,24 aufeinander zu geschoben, wobei die Längkanten 21', 24'in die Nuten 21 formschlüssig gesteckt werden, bevorzugt wird eine dichte und kraftschlüssige Verbindung hergestellt. Die Längskanten der Bodenbleche 18, 19, 24 können auch auf einer Seite abgebogen sein, wie in Fig 4 dargestellt. Dann können sich die abgebogenen Schenkel 19" auf den Vorsprüngen 22', 23' der Profilstücke 20' der Kabeldurchführung abstützen. Die Kabeldurchführung ist nicht nur für Schaltschränke gedacht. Sie kann in allen Schränken eingesetzt werden, in die Kabel eingeführt bzw. aus die Kabel herausgeführt werden sollen. Die Anbringung kann auch in den Seitenwänden oder Deckseitig erfolgen.

## Patentansprüche

1. Kabeleinführung für einen Schaltschrank, wobei die Kabeleinführung an einer der Seiten, insbesondere der Bodenseite des Schaltschrankes angeordnet ist, bestehend aus
a) einem Rahmengestell (10) mit parallelen Rahmenschenkeln (16, 17),
b) Blechen (18, 19, 24) zum Abdecken des Rahmengestells (10) mit Längsseiten (21', 24') und Schmalseiten (18', 19'), wobei die Bleche (18, 19, 24) verschiebbar und mit parallelen Rahmenschenkeln (16; 17) über ihre Schmalseiten (18', 19') verbindbar sind, und
c) mindestens einer Kabeldurchführung (20) mit Schenkeln (22, 23) an ihrer Schmalseite, mit welchen sie sich auf parallelen Rahmenschenkeln (16, 17) abstützt,
**dadurch gekennzeichnet, daß**
d) jede Längskante der Kabeldurchführung (20) durch ein Profilstück (20') gebildet wird, und
e) jedes Profilstück eine in Profilrichtung verlaufende Nut (21) aufweist, welche auf der Höhe der Längskante (21', 24') der Bleche (18, 19, 24) angeordnet und zu deren Aufnahme ausgebildet ist.

2. Kabeldurchführung nach Anspruch 1, **dadurch gekennzeichnet, daß** die Längskanten (21', 24') in den Nuten (21) dicht und kraftschlüssig untergebracht sind .

3. Kabeldurchführung nach Anspruch 1 oder 2, **dadurch gekennzeichnet, daß** die Längskanten (21', 24') in den Nuten (21) form- und kraftschlüssig untergebracht sind.

4. Kabeleinführung für einen Schaltschrank, wobek die Kabeleinführung an einer der Seiten, Insbesondere der Bodenseite des Schaltschrankes angeordnet ist, bestehend aus
a) einem Rahmengestell (10) mit parallelen Rahmenschenkeln (16, 17),
b) Blechen (18, 19, 24) mit Längsseiten (21', 24') und Schmalseiten (18', 19') zum Abdecken des Rahmengestells (10), wobei eine Längsseite (21', 24') einen abgekanteten Schenkel (19") aufweist und die Bleche (18, 19, 24) verschiebbar und mit parallelen Rahmenschenkeln (76, 17) über ihre Schmalseiten (18', 19') verbindbar sind, und
c) mindestens einer Kabeldurchführung (20) mit Schenkeln (22, 23) an ihrer Schmalseite, mit welchen sie sich auf parallelen Rahmenschenkeln (16, 17) abstützt,
**dadurch gekennzeichnet, daß**
d) jede Längskante der Kabeldurchführung (20) durch ein Profilstück (20') gebildet wird, und
e) jedes Profilstück einen in Profilrichtung verlaufenden Vorsprung (22', 23') aufweist, zur Abstützung des abgekanteten Schenkels (19") eines Bodenblechs (18, 19, 24).

5. Kabeldurchführung nach einem der Ansprüche 1 bis 4, **dadurch gekennzeichnet, daß** zwei oder mehr Kabeleinführungen nebeneinander verlaufen und durch ein Blechstück miteinander verbunden sind.

## Claims

1. Cable entry for a switchgear cabinet, the cable entry being disposed on one of the sides, in particular on the base side of the switchgear cabinet, comprising
a) a frame (10) having parallel frame members (16, 17),
b) metal sheets (18, 19, 24) with long sides (21', 24') and narrow sides (18', 19') for covering the frame (10), the metal sheets (18, 19, 24) being moveable and connectable to parallel frame members (16, 17) via their narrow sides (18', 19'), and
c) at least one cable duct (20) with members (22, 23) on its narrow side, with which members it is supported on parallel frame members (16, 17),
**characterised in that**
d) each long edge of the cable duct (20) is formed by a profile piece (20'), and
e) each profile piece has a groove which extends in the profile direction, is disposed at the height of the long edge (21', 24') of the metal sheets (18, 19, 24) and is configured to receive them.

2. Cable duct according to claim 1, **characterised in that** the long edges (21', 24') are accommodated in the grooves (21) in an impermeable and frictional manner.

3. Cable duct according to claim 1 or 2, **characterised in that** the long edges (21', 24') are accommodated in the grooves (21) in a form-fitting and frictional manner.

4. Cable entry for a switchgear cabinet, the cable entry being disposed on one of the sides, in particular on the base side of the switchgear cabinet, comprising
a) a frame (10) having parallel frame members (16, 17),
b) metal sheets (18, 19, 24) with long sides (21', 24') and narrow sides (18', 19') for covering the frame (10), one long side (21', 24') having a bent member (19"), and the metal sheets (18, 19, 24) being moveable and connectable to parallel frame members (16, 17) via their narrow sides (18', 19'), and
c) at least one cable duct (20) with members (22, 23) on its narrow side, with which members it is supported on parallel frame members (16, 17),
**characterised in that**
d) each long edge of the cable duct (20) is formed by a profile piece (20'), and
e) each profile piece has a projection (22', 23') which extends in the profile direction, for supporting the bent member (19") of a base metal sheet (18, 19, 24).

5. Cable duct according to one of the claims 1 to 4, **characterised in that** two or more cable entries extend adjacent to each other and are connected to each other by means of a sheet metal piece.

## Revendications

1. Entrée de câbles pour armoire de distribution, l'entrée de câble étant disposée sur un des côtés, en particulier le côté inférieur, de l'armoire de distribution, constituée
a) d'un châssis (10) comprenant des branches parallèles de cadre (16, 17),
b) de tôles (18, 19, 24) destinées à recouvrir le châssis (10) avec des côtés longitudinaux (21', 24') et des petits côtés (18', 19'), les tôles (18, 19, 24) étant mobiles et les branches parallèles de cadre (16, 17) pouvant être reliées par leurs petits côtés (18', 19'), et
c) d'au moins un passe-câbles (20) comprenant des branches (22, 23) au niveau de leur petit côté, avec lesquelles il s'appuie sur les branches parallèles de cadre (16, 17),
**caractérisée en ce que**
d) chaque arête longitudinale du passe-câbles (20) est formée par une pièce profilée (20'), et
e) chaque pièce profilée comprend une rainure s'étendant dans la direction du profil, laquelle rainure est disposée à hauteur de l'arête longitudinale (21', 24') des tôles (16, 19, 24) et est conçue par rapport à son logement.

2. Passe-câbles selon la revendication 1, **caractérisé en ce que** les arêtes longitudinales (21', 24') sont introduites dans les rainures (21) de manière étanche et par adhérence.

3. Passe-câble selon la revendication 1 ou 2, **caractérisé en ce que** les arêtes longitudinales (21', 24') sont introduites dans les rainures (21) par engagement positif et par adhérence.

4. Entrée de câbles pour armoire de distribution, l'entrée de câble étant disposée sur un des côtés, en particulier le côté inférieur, de l'armoire de distribution, constituée
a) d'un châssis (10) comprenant des branches parallèles de cadre (16, 17),
b) de tôles (18, 19, 24) comprenant des côtés longitudinaux (21', 24') et des petits côtés (18', 19'), destinées à recouvrir le châssis (10), un côté longitudinal (21', 24') comprenant une branche repliée (19") et les tôles (18, 19, 24) étant mobiles et pouvant être reliées aux branches parallèles de cadre (16, 17) par leurs petits côtés (18', 19'), et
c) d'au moins un passe-câble (20) comprenant des branches (22, 23) au niveau de leur petit côté, avec lesquelles il s'appuie sur les branches parallèles de cadre (16, 17),
**caractérisé en ce que**
d) chaque arête longitudinale du passe-câble (20) est formée par une pièce profilée (20'), et
e) chaque pièce profilée comprend une saillie (22', 23') s'étendant dans la direction du profil, destinée à soutenir la branche repliée (19'') d'une tôle de fond (18, 19, 24).

5. Passe-câbles selon l'une des revendications 1 à 4, **caractérisé en ce que** deux entrées de câbles ou plus s'étendent l'une à côté de l'autre et sont reliées l'une à l'autre par une pièce de tôle.
